# EUROPÄISCHE PATENTANMELDUNG

(11) **EP 3 425 166 A1**
(43) Veröffentlichungstag der Anmeldung: **09.01.2019**
(21) Anmeldenummer: 18177859.8
(22) Anmeldetag: 14.06.2018
(51) Int. Cl.: F01D 5/30

(54) **SCHAUFEL - SCHEIBEN - ANORDNUNG FÜR EINE STRÖMUNGSMASCHINE**

(30) Priorität: 07.07.2017 DE 102017211646
(71) Anmelder: MTU Aero Engines AG, 80995 München (DE)
(72) Erfinder: Klötzer, Alexander, 82256 Fürstenfeldbruck (DE)

(57) **Zusammenfassung**

Die vorliegende Erfindung betrifft eine Schaufel - Scheiben - Anordnung für eine Strömungsmaschine mit einer Scheibe (4) und einer Vielzahl von Nuten (5), die in einer Mantelfläche der Scheibe zur Aufnahme von Schaufeln angeordnet sind, sowie einer Vielzahl von Schaufeln mit Schaufelfüßen (3), die in den Nuten aufgenommen sind, wobei zwischen mindestens einem Schaufelfuß (3) und einer Nutoberfläche (7) mindestens einer Nut (5) mindestens ein Wärmeschutzelement (16) so angeordnet ist, dass im Nutbereich kein direkter Kontakt zwischen Schaufelfuß (3) und Scheibe (4) gegeben ist, wobei das Wärmeschutzelement (16) zumindest zum Teil aus einem keramischen Werkstoff gebildet ist, der Zirkonoxid ist oder Zirkonoxid basierend ist.

## Beschreibung

### HINTERGRUND DER ERFINDUNG

### GEBIET DER ERFINDUNG

Die vorliegende Erfindung betrifft eine Schaufel - Scheiben - Anordnung für eine Strömungsmaschine, wie beispielsweise eine stationäre Gasturbine oder eine Flugtriebwerk. Derartige Schaufel - Scheiben - Anordnungen weisen eine Scheibe und eine Vielzahl von Schaufeln auf, die an der Mantelfläche der Scheibe angeordnet sind. Hierzu weist die Scheibe eine Vielzahl von Nuten in der Mantelfläche der Scheibe auf, in welchen die Schaufeln mit ihren Schaufelfüßen befestigt werden können.

### STAND DER TECHNIK

Bei Strömungsmaschinen, wie stationären Gasturbinen oder Flugtriebwerken, wird das durchströmende Fluid von um eine Drehachse drehenden Schaufeln angetrieben bzw. komprimiert bzw. bewirkt das durchströmende Fluid durch Wechselwirkung mit drehbaren Schaufeln, dass diese zum Drehen um eine Drehachse angetrieben werden. Hierzu enthalten die Strömungsmaschinen eine Vielzahl von Schaufeln, die auf Drehscheiben angeordnet sind. Zur Verbindung der Schaufeln mit entsprechenden Drehscheiben sind Schaufel - Scheiben - Anordnungen bekannt, bei denen in der Mantelfläche der jeweiligen Scheibe eine Vielzahl von Nuten ausgebildet ist, in welche die Schaufeln mit ihren jeweiligen Schaufelfüßen eingesetzt werden können. Beispiele hierzu finden sich in der EP 3 000 967 A2, US 2016/0341052 A1, US 2015/0322806 A1 und US 2016/0040539 A1.

Bei der Schaufel - Scheiben - Anordnung der US 2016/0341052 A1 werden zur Vermeidung von Verschleiß verschiedene Bleche zwischen Teilen der Nutoberfläche und des Schaufelfußes angeordnet, während bei der US 2016/0040539 A1 zwischen Nutoberfläche und Schaufelfuß ein Deckband - Element mit einer Zwischenschicht vorgesehen ist. Die US 2015/0322806 A1 beschreibt eine elastisch verformbare Federanordnung zur Anordnung von Keramik - Matrix - Verbund - Schaufeln in metallischen Scheiben. In der EP 3 000 967 A2 wird schließlich unterhalb des Schaufelfußes in einem Zuführkanal für Kühlluft in der Nut der Scheibe eine Wärmeabschirmung angeordnet, um den Kühleinfluss der Kühlluft auf die Drehscheibe zu vermindern.

Allerdings kann durch diese Anordnung die Problematik, dass mit zunehmenden Betriebstemperaturen die Temperaturbelastung der Scheiben ebenfalls weiter ansteigt nur unzureichend gelöst werden. Um jedoch die Arbeitstemperatur der Strömungsmaschine und dadurch den Wirkungsgrad der Strömungsmaschinen weiter erhöhen zu können, ist es jedoch erforderlich andere Lösungen für hohe Betriebstemperaturen im Bereich der Schaufel - Scheiben - Anordnungen zu finden.

### OFFENBARUNG DER ERFINDUNG

### AUFGABE DER ERFINDUNG

Es ist deshalb Aufgabe der vorliegenden Erfindung eine Schaufel - Scheiben - Anordnung bereitzustellen, die es ermöglicht, höhere Fluidtemperaturen in der Strömungsmaschine zuzulassen, um den Wirkungsgrad der Strömungsmaschine zu erhöhen. Gleichzeitig soll jedoch die Lösung einfach umsetzbar sein und den Betrieb der Strömungsmaschine nicht beeinträchtigen.

### TECHNISCHE LÖSUNG

Diese Aufgabe wird gelöst durch eine Schaufel - Scheiben - Anordnung mit den Merkmalen des Anspruchs 1. Vorteilhafte Ausgestaltungen sind Gegenstand der abhängigen Ansprüche.

Die Erfindung schlägt zur Reduzierung der Temperaturbelastung von Scheiben in Schaufel - Scheiben - Anordnungen von Strömungsmaschinen vor, dass zwischen einem Schaufelfuß einer Schaufel und der Nutoberfläche einer Nut in der Scheibe mindestens ein Wärmeschutzelement so angeordnet ist, dass im Nutbereich kein direkter Kontakt zwischen Schaufelfuß und Scheibe gegeben ist, sodass keine direkte Wärmeübertragung von dem Schaufelfuß in die Scheibe erfolgen kann. Stattdessen kann über das Wärmeschutzelement die Wärmeleitung von dem Schaufelfuß in die Scheibe kontrolliert werden. Die Erfindung schlägt weiter vor, dass das Wärmeschutzelement zumindest zum Teil aus einem keramischen Werkstoff gebildet ist. Dies hat den Vorteil, dass durch einen keramischen Werkstoff mit niedriger Wärmeleitfähigkeit ein Temperaturgradient zwischen Schaufelfuß und Scheibe eingestellt werden kann. Außerdem erfüllen keramische Werkstoffe die Anforderungen im Betrieb im Bereich zwischen Schaufelfuß und Scheibe mit hohen Drücken und hohen Temperaturen in guter Weise.

Der Nutbereich, in dem kein direkter Kontakt zwischen Schaufelfuß und Nutoberfläche gegeben sein soll, um die Wärmeleitung aus der Schaufel bzw. dem Schaufelfuß in die Scheibe zu vermeiden bzw. zu verringern, umschließt zumindest den gesamten Bereich, der für die Anordnung und das Halten der Schaufel in der Scheibe notwendig ist. Insbesondere umfasst der Nutbereich, in dem ein direkter Kontakt zwischen Schaufelfuß und Nutoberfläche verhindert werden soll, den Bereich der Auflageflächen, über die die Kraftübertragung von den Schaufeln auf die Scheibe erfolgt. Darüber hinaus kann der Nutbereich, in dem ein direkter Kontakt zwischen Schaufelfuß und Nutoberfläche vermieden werden soll, auf Basis des angestrebten Zwecks, nämlich der Vermeidung der Wärmeübertragung von dem Schaufelfuß in die Scheibe, definiert werden.

Nach einer Ausführungsform kann das gesamte Wärmeschutzelement aus einem keramischen Werkstoff gebildet sein.

Das Wärmeschutzelement kann als Flächenelement ausgebildet sein, welches sich mit seiner Längsrichtung entlang der Längsrichtung der Nut erstreckt und in einer Richtung quer dazu eine Breite aufweist, die sich entlang der Nutoberfläche oder der Oberfläche des Schaufelfußes erstreckt. In einer Richtung quer zu Längsrichtung und zur Breitenrichtung weist das Flächenelement eine Dicke auf, die jedoch sehr viel kleiner ist als die Breite oder die Länge ist.

Ein derartiges Flächenelement kann dreidimensional so ausgebildet sein, dass es an der Oberfläche des Schaufelfußes und / oder an der Nutoberfläche anliegt. Darüber hinaus ist es jedoch auch möglich, dass ein entsprechendes Flächenelement im Zwischenraum zwischen Nutoberfläche und Oberfläche des Schaufelfußes eine beliebige dreidimensionale Form aufweist.

Das Wärmeschutzelement kann nicht nur als ein Flächenelement ausgebildet sein, sondern es kann auch ein Flächenelement umfassen, d.h. neben dem Flächenelement weitere Elemente beinhalten.

Das Wärmeschutzelement oder das Flächenelement kann als Metall - Keramik - Verbundelement ausgebildet sein. Insbesondere kann das Wärmeschutzelement oder das Flächenelement als ein mehrlagiges Metall - Keramik - Verbundelement realisiert sein, wobei die mehreren Lagen insbesondere in Dickenrichtung des Flächenelements bzw. des als Flächenelement ausgebildeten Wärmeschutzelements angeordnet sein können. Beispielsweise kann das Metall -Keramik - Verbundelement als dreilagiges Element ausgeführt sein, wobei zwischen zwei äußeren metallischen Lagen eine innere Lage aus einem keramischen Material eingelagert sein kann. Ein derartiges Metall - Keramik - Verbundelement kann einfach aus einem metallischen Blech oder einer Metallfolie durch Aufbringen einer keramischen Schicht, beispielsweise durch Spritzen, und anschließendes Aufbringen einer weiteren Metallschicht hergestellt werden.

Darüber hinaus kann ein derartiges Wärmeschutzelement weitere verschiedene Funktionen erfüllen. Beispielsweise kann das Wärmeschutzelement einer derartigen Ausführungsform aber auch von anderen Ausführungsarten zusätzlich zur Wärmeschutzfunktion bzw. zur Funktion der Verringerung der Wärmeleitfähigkeit vom Schaufelfuß in die Scheibe die Funktion des Anpassens der Form des Schaufelfußes an die Nut als auch die Funktion eines Verschleißschutzelementes erfüllen.

Das Wärmeschutzelement kann als Distanzstück ausgebildet sein oder durch mehrere Distanzstücke gebildet sein bzw. ein oder mehrere Distanzstücke umfassen. Die Distanzstücke können in vorteilhafter Weise aus einem keramischen Werkstoff, wie beispielsweise Zirkonoxid, gebildet sein und / oder im Bereich der Auflageflächen, an denen die Kraftübertragung vom Schaufelfuß in die Scheibe erfolgt, angeordnet sein, um Schaufelfuß und Nutoberfläche wirksam auf Abstand zu halten.

Das oder die Distanzstücke können in dem Spalt zwischen Schaufelfuß und Nutoberfläche durch ein Flächenelement gehalten werden, wobei das Flächenelement das oder die Distanzstücke umschließen kann und / oder Aussparungen bereitstellen kann, in denen die Distanzstücke gehalten werden können. Zusätzlich oder alternativ können das oder die Distanzstücke auch in entsprechenden Aussparungen am Schaufelfuß und / oder der Scheibe aufgenommen sein.

Der keramische Werkstoff, aus denen die Distanzstücke gebildet sind, ist Zirkonoxid oder ein keramischer Werkstoff, der auf Zirkonoxid basiert, da diese Materialien die erforderlichen Eigenschaften für den gewünschten Einsatz in guter Weise erfüllen. Entsprechend findet Zirkonoxid der ein darauf basierendes Material auch als keramisches Material allgemein im Zusammenhang mit Wärmeschutzelementen der erfindungsgemäßen Art Verwendung, beispielsweise als keramisches Material für die Metall - Keramik - Verbundelemente oder für die voll aus Keramik gebildeten Wärmeschutzelemente. Durch Einstellen eines möglichst steilen Temperaturgefälles bzw. eines entsprechenden Temperaturgradienten vom Schaufelfuß bzw. der Schaufel zur Scheibe kann entsprechend die Einsatztemperatur für die Scheibe bei erhöhter Betriebstemperatur bzw. Fluidtemperatur konstant gehalten werden oder bei konstanter Betriebstemperatur bzw. Fluidtemperatur kann die Einsatztemperatur der Scheibe verringert werden.

### KURZBESCHREIBUNG DER FIGUREN

Die beigefügten Zeichnungen zeigen in rein schematischer Weise in
- Figur 1: eine perspektivische Darstellung einer Schaufel, wie sie in der vorliegenden Erfindung Verwendung finden kann,
- Figur 2: eine Schnittansicht durch eine erste erfindungsgemäße Schaufel - Scheiben - Anordnung,
- Figur 3: eine Schnittansicht doch eine zweite erfindungsgemäße Schaufel - ScheibenAnordnung,
- Figur 3a: eine Detailansicht der Anordnung des Wärmeschutzelements aus Figur 3,
- Figur 4: eine Schnittansicht durch eine dritte erfindungsgemäße Schaufel - ScheibenAnordnung,
- Figur 5: eine Schnittansicht durch eine vierte erfindungsgemäße Schaufel - ScheibenAnordnung,
- Figur 6: eine Schnittansicht durch eine fünfte erfindungsgemäße Schaufel - ScheibenAnordnung und in
- Figur 6a: eine Detailansicht der Anordnung eines Distanzstücks in dem Wärmeschutzelement aus Figur 6.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

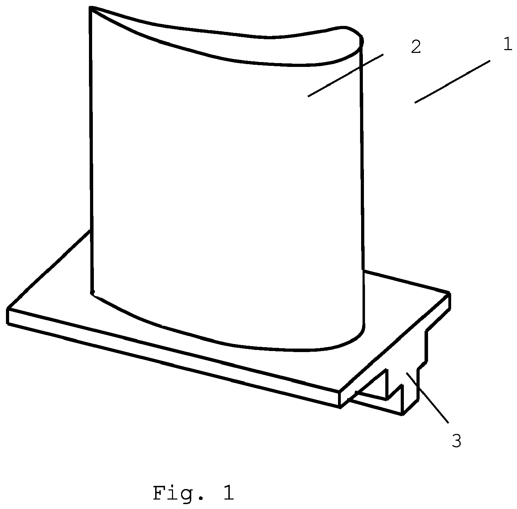

Die Figur 1 zeigt in einer perspektivischen Darstellung eine Schaufel 1 einer Strömungsmaschine, wie beispielsweise einer stationären Gasturbine oder eines Flugtriebwerks, welche mit einer Scheibe der Strömungsmaschine verbunden werden kann. Hierzu weist die Schaufel 1 einen Schaufelfuß 3 auf, der in eine Nut einer Scheibe eingeführt werden kann. Üblicherweise werden eine Vielzahl von Schaufeln 1 mit den jeweiligen Schaufelfüßen 3 in eine Vielzahl von Nuten 5 an der Mantelfläche einer Scheibe angeordnet, um eine Vielzahl von Schaufelblättern 2 an der Scheibe zu befestigen. Wie sich auch aus den nachfolgenden Darstellungen der Ausführungsbeispiele ergibt, können die Form des Schaufelfußes 3 und einer entsprechenden komplementären Nut in beliebigen, unterschiedlichen Formen ausgeführt sein, sodass die Erfindung nicht auf eine spezielle Form des Schaufelfußes 3 beschränkt ist.

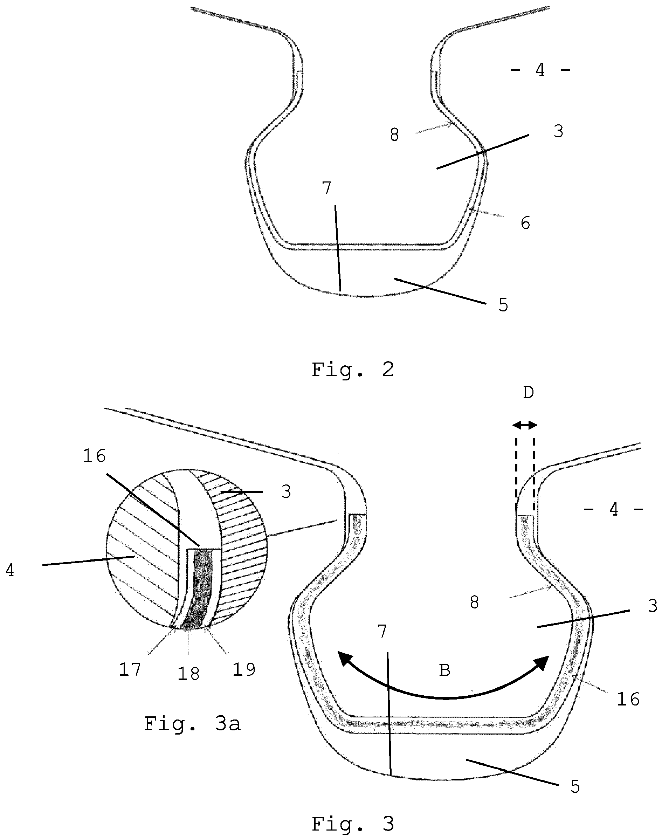

Die Figur 2 zeigt ein erstes erfindungsgemäßes Ausführungsbeispiel einer Schaufel - Scheiben - Anordnung in eine Schnittdarstellung, wobei lediglich ein Teil der Scheibe 4 mit einer Nut 5 und ein Teil der Schaufel mit dem Schaufelfuß 3 gezeigt sind. Wie sich aus der Darstellung der Figur 2 ergibt, ist bei der erfindungsgemäßen Schaufel - Scheiben - Anordnung zwischen der Nutoberfläche 7 der Nut 5 der Scheibe 4 und der Oberfläche des Schaufelfußes 3 ein Wärmeschutzelement 6 angeordnet, welches bei dem Ausführungsbeispiel der Figur 2 an der Oberfläche des Schaufelfußes 3 anliegt. Insbesondere erstreckt sich das Wärmeschutzelement 6 über die gesamte Oberfläche des Schaufelfußes 3, sodass im Bereich des Schaufelfußes bzw. der Nut 5 kein direkter Kontakt zwischen der Schaufel bzw. dem Schaufelfuß 3 und der Scheibe 4 vorliegt. Entsprechend kann ein direkter Wärmeübergang von der Schaufel zur Scheibe 4 unterbunden werden. Insbesondere liegt das Wärmeschutzelement 6 auch im Bereich der Auflagefläche 8 vor, wo im Betrieb die Kraftübertragung von der Schaufel auf die Scheibe 4 erfolgt und ein entsprechend intensiver Kontakt zwischen Schaufelfuß 3 und Scheibe 4 vorliegen würde. Bei dem gezeigten Ausführungsbeispiel der Figur 2 ist das Wärmeschutzelement 6 aus einem keramischen Werkstoff, wie beispielsweise Zirkonoxid gebildet, sodass aufgrund der niedrigen Wärmeleitfähigkeit des keramischen Werkstoffs bzw. des Zirkonoxids die Wärmeleitung von dem Schaufelfuß 3 in die Scheibe 4 behindert wird. Gleichzeitig ermöglicht der keramische Werkstoff im Bereich der Auflagefläche 8 die Aufnahme der Druckbelastungen im Betrieb.

Die Figur 3 zeigt eine weitere Ausführungsform eine erfindungsgemäßen Schaufel - Scheiben - Anordnung mit einem Wärmeschutzelement 16, wobei sich die Ausführungsform der Figur 3 von derjenigen der Figur 2 lediglich darin unterscheidet, dass das Wärmeschutzelement 16 einen anderen Aufbau als das Wärmeschutzelement 6 aufweist. Ansonsten ist das Wärmeschutzelement 16 von der Form und der Anordnung entsprechend dem Wärmeschutzelement 6 ausgebildet, sodass sich eine weitere Beschreibung hierzu erübrigt.

Wie sich aus der Detailansicht der Figur 3a ergibt, hat das Wärmeschutzelement 16 einen mehrlagigen Aufbau, wobei in dem gezeigten Ausführungsbeispiel das Wärmeschutzelement 16 dreilagig aufgebaut ist. Die drei Lagen des Wärmeschutzelements 16 sind durch eine erste äußere metallische Lage 17 und eine zweite äußere metallische Lage 19 gebildet, die eine innere Lage 18 aus einem keramischen Werkstoff einschließen.

Das Wärmeschutzelement 16 ist als Flächenelement ausgebildet, was bedeutet, dass es sich flächige entlang der Längsrichtung der Nut 5, also senkrecht zur Bildebene erstreckt und quer dazu eine Breite B aufweist, die sich entlang der Oberfläche des Schaufelfußes 3 quer zur Nut 5 erstreckt, wie der gebogene Doppelpfeil der Figur 3 angibt. Quer zur Längsrichtung und Breitenrichtung des flächigen Wärmeschutzelements 16 weist dieses eine Dicke D auf (siehe Doppelpfeil der Fig. 3), wobei die unterschiedlichen Lagen entlang der Dickenrichtung aufeinander angeordnet sind.

Das flächige Wärmeschutzelement 16 kann in einfacher Weise dadurch hergestellt werden, dass auf ein Metallblech bzw. eine Metallfolie, die die erste äußere metallische Lage 17 darstellt, eine keramische Schicht aufgebracht wird, die nach Fertigstellung die innere Keramikklage 18 bildet, wobei anschließend auf die innere Keramiklage 18 eine weitere zweite äußere metallische Lage 19 in Form einer weiteren metallischen Schicht abgeschieden werden kann. Der keramische Werkstoff der inneren Keramiklage 18, der beispielsweise durch Zirkonoxid gebildet sein kann, kann beispielsweise durch thermisches Spritzen aufgebracht werden.

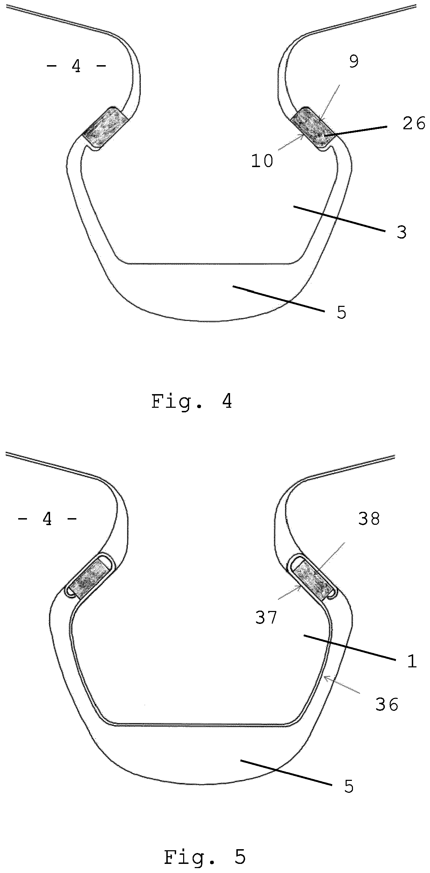

Die Figur 4 zeigt in einer zu den Figuren 2 und 3 vergleichbaren Schnittdarstellung eine dritte Ausführungsform eines Wärmeschutzelements 26 in Form von keramischen Distanzstücken, die insbesondere im Bereich der Auflagefläche in Aussparungen 9,10 am Schaufelfuß 3 und der Nut 5 der Scheibe 4 angeordnet sind, wobei in Längsrichtung der Nut 5 das Distanzstück bzw. das Wärmeschutzelement 26 als ein längliches Wärmeschutzelement ausgeführt sein kann oder es kann eine Vielzahl von beabstandet zueinander angeordneten Wärmeschutzelementen 26 vorgesehen sein. Wie sich ebenfalls aus der Figur 4 ergibt, sind an zwei Seiten des Schaufelfußes 3 entsprechende Wärmeschutzelemente 26 vorgesehen.

Das Wärmeschutzelement 26 ist genauso wie das Wärmeschutzelement 6 der Ausführungsform der Figur 2 vollständig aus einem keramischen Werkstoff, wie beispielsweise Zirkonoxid, gebildet. Allerdings ist es auch möglich, dass das Wärmeschutzelement 26 aus einem Metall - Keramik - Verbund gebildet ist, beispielsweise durch einen entsprechenden mehrlagigen Aufbau wie beim Ausführungsbeispiel der Figur 3.

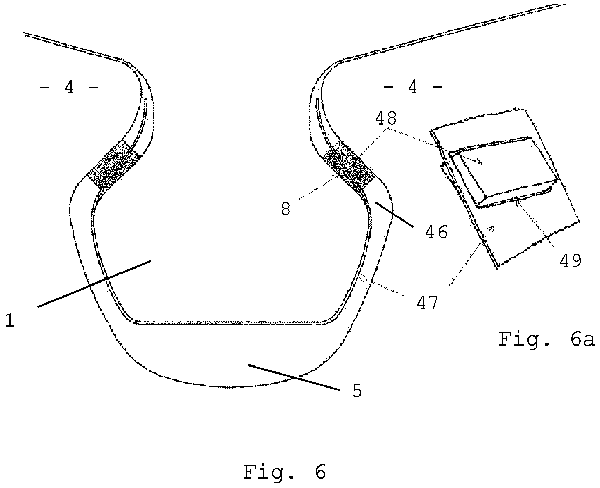

Die Ausführungsbeispiele der Figuren 5 und 6 zeigen Wärmeschutzelemente 36 und 46 aus jeweils einer Kombination eines Flächenelements 37,47 und eines Distanzstücks 38,48 aus einem keramischen Werkstoff.

Bei der Ausführungsform der Figur 5 ist das Wärmeschutzelement 36 so ausgebildet, dass ein metallisches Flächenelement 37 ähnlich wie die Wärmeschutzelemente 6 und 16 der Ausführungsformen der Figuren 2 und 3 an den Schaufelfuß 3 anliegend ausgebildet ist, wobei in den Bereichen der Auflageflächen 8 das Flächenelement 37 umgebördelt ist, um in den umgebördelten Bereichen ein keramisches Distanzstück 38 aufzunehmen.

Dagegen weist das metallische Flächenelement 47 des Wärmeschutzelements 46 der Ausführungsform der Figur 6 in den Bereichen der Auflageflächen 8 eine oder mehrere Aussparungen 49 auf, in denen keramische Distanzstücke 48 aufgenommen sind, wie sich insbesondere auch aus der Detailansicht der Figur 6a ergibt. Bei der Ausführungsform der Figur 6 kann genauso wie bei den Ausführungsformen der Figuren 4 und 5 lediglich ein Distanzstück 48 im Bereich jeder Auflagefläche 8 vorgesehen sein, welches sich über einen weiten Bereich der Längsrichtung der Nut 5 erstrecken kann, oder es kann eine Vielzahl von mehreren Distanzstücken 48 vorgesehen sein, die zueinander beanstandet über die Länge des Nutbereichs verteilt sind.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Schaufel
- 2: Schaufelblatt
- 3: Schaufelfuß
- 4: Scheibe
- 5: Nut
- 6: Wärmeschutzelement
- 7: Nutoberfläche
- 8: Auflagebereich
- 9: Aussparung
- 10: Aussparung
- 16: Wärmeschutzelement
- 17: erste äußere metallische Lage
- 18: innere Keramiklage
- 19: zweite äußere metallische Lage
- 26: Wärmeschutzelement
- 36: Wärmeschutzelement
- 37: Flächenelement
- 38: Distanzstück
- 46: Wärmeschutzelement
- 47: Flächenelement
- 48: Distanzstück
- 49: Aussparung

## Patentansprüche

1. Schaufel - Scheiben - Anordnung für eine Strömungsmaschine mit einer Scheibe (4) und einer Vielzahl von Nuten (5), die in einer Mantelfläche der Scheibe zur Aufnahme von Schaufeln (1) angeordnet sind, sowie einer Vielzahl von Schaufeln (1) mit Schaufelfüßen (3), die in den Nuten aufgenommen sind,
**dadurch gekennzeichnet, dass**
zwischen mindestens einem Schaufelfuß (3) und einer Nutoberfläche (7) mindestens einer Nut (5) mindestens ein Wärmeschutzelement (6, 16, 26, 36, 46) so angeordnet ist, dass im Nutbereich kein direkter Kontakt zwischen Schaufelfuß (3) und Scheibe (4) gegeben ist, wobei das Wärmeschutzelement (6, 16, 26, 36, 46) zumindest zum Teil aus einem keramischen Werkstoff gebildet ist, der Zirkonoxid ist oder Zirkonoxid basierend ist.

2. Schaufel - Scheiben - Anordnung nach Anspruch 1,
**dadurch gekennzeichnet, dass**
das gesamte Wärmeschutzelement (6, 26) aus einem keramischen Werkstoff gebildet ist.

3. Schaufel - Scheiben - Anordnung nach einem der vorhergehenden Ansprüche,
**dadurch gekennzeichnet, dass**
das Wärmeschutzelement (16) als ein entlang der Nut (5) sich erstreckendes Flächenelement ausgebildet ist oder ein Flächenelement (37, 47) umfasst, welches eine Länge entlang der Längsrichtung der Nut und eine Breite quer zur Längsrichtung der Nut entlang des Schaufelfußes oder der Nutoberfläche und eine Dicke quer zur Länge und Breite aufweist, die kleiner als die Länge und Breite des Flächenelements ist, und wobei das Flächenelement an einer Oberfläche des Schaufelfußes und / oder der Nutoberfläche anliegt oder zwischen Nutoberfläche (7) und Oberfläche des Schaufelfußes (3) eine beliebige Form aufweist.

4. Schaufel - Scheiben - Anordnung nach einem der Ansprüche 1 oder 3,
**dadurch gekennzeichnet, dass**
das Wärmeschutzelement (16) oder das Flächenelement (37, 47) als ein Metall - Keramik - Verbundelement ausgebildet ist, welches insbesondere in Dickenrichtung einen mehrlagigen, vorzugsweise dreilagigen Aufbau aufweist, wobei die äußeren Lagen des mehrlagigen Aufbaus aus einem metallischen Werkstoff gebildet sind.

5. Schaufel - Scheiben - Anordnung nach einem der vorhergehenden Ansprüche,
**dadurch gekennzeichnet, dass**
das Wärmeschutzelement (36, 46) mindestens ein, vorzugsweise mehrere Distanzstücke (38, 48) umfasst.

6. Schaufel - Scheiben - Anordnung nach Anspruch 5,
**dadurch gekennzeichnet, dass**
das mindestens eine Distanzstück (38, 48) durch das Flächenelement (37, 47) gehalten wird, insbesondere zumindest teilweise von dem Flächenelement umgeben ist und / oder in einer Aussparung (49) des Flächenelements gehalten wird.

7. Schaufel - Scheiben - Anordnung nach einem der vorhergehenden Ansprüche,
**dadurch gekennzeichnet, dass**
das mindestens eine Wärmeschutzelement (26) und /oder das mindestens eine Distanzstück (38, 48) in einer Aussparung (9, 10) am Schaufelfuß (3) und / oder der Scheibe (4) aufgenommen ist.

8. Schaufel - Scheiben - Anordnung nach einem der Ansprüche 5 bis 7,
**dadurch gekennzeichnet, dass**
das Distanzstück (38, 48) aus einem keramischen Werkstoff gebildet ist.

9. Schaufel - Scheiben - Anordnung nach einem der vorhergehenden Ansprüche,
**dadurch gekennzeichnet, dass**
das das mindestens eine Wärmeschutzelement (6, 16, 26, 36, 46) so ausgebildet ist und insbesondere eine geringere Wärmeleitfähigkeit als der Schaufelfuß (3) und / oder die Scheibe (4) aufweist, sodass sich im Betrieb ein Temperaturgefälle vom Schaufelfuß (3) zur Scheibe (4) einstellt.
